(19) Europäisches Patentamt / European Patent Office / Office européen des brevets

(11) **EP 4 292 776 A1**

(12) **DEMANDE DE BREVET EUROPEEN**

(43) Date de publication:
**20.12.2023 Bulletin 2023/51**

(21) Numéro de dépôt: **23178718.5**

(22) Date de dépôt: **12.06.2023**

(51) Classification Internationale des Brevets (IPC):
**B25J 9/16** (2006.01) **B25J 13/08** (2006.01)

(52) Classification Coopérative des Brevets (CPC):
**B25J 9/1694; B25J 9/1692; B25J 13/085;**
G05B 2219/37016; G05B 2219/39058;
G05B 2219/39529; G05B 2219/40599

(84) Etats contractants désignés:
**AL AT BE BG CH CY CZ DE DK EE ES FI FR GB
GR HR HU IE IS IT LI LT LU LV MC ME MK MT NL
NO PL PT RO RS SE SI SK SM TR**
Etats d'extension désignés:
**BA**
Etats de validation désignés:
**KH MA MD TN**

(30) Priorité: **13.06.2022 FR 2205696**

(71) Demandeur: **Staubli Faverges
74210 Faverges-Seythenex (FR)**

(72) Inventeur: **JOLY, Luc
74210 Faverges-Seythenex (FR)**

(74) Mandataire: **Lavoix
62, rue de Bonnel
69448 Lyon Cedex 03 (FR)**

(54) **SYSTÈMES ET PROCÉDÉS POUR METTRE À JOUR LE COEFFICIENT DE CORRECTION D'UN CAPTEUR D'EFFORT D'UN ROBOT INDUSTRIEL**

(57) Procédé pour calibrer automatiquement un dispositif de mesure d'effort extérieur d'un robot industriel (2), ledit robot industriel comportant un bras de robot (4) multiaxes, le bras de robot comportant, pour chaque axe d'articulation, un actionneur électrique (M1,....,M6) et un capteur de position (C1,...,C6) apte à mesurer la position articulaire de l'articulation correspondante, le robot comportant un dispositif de mesure d'effort (20), le dispositif de mesure d'effort (20) comportant au moins un capteur de mesure apte à mesurer les efforts appliqués sur le bras de robot. Le procédé permet de mettre à jour un coefficient de correction des efforts appliqués en l'incrémentant avec une valeur proportionnelle à l'effort moyen des efforts extérieurs exercés si certaines conditions sont satisfaites.

FIG.1

EP 4 292 776 A1

**Description**

DOMAINE TECHNIQUE

La présente invention concerne les robots industriels, et porte plus particulièrement sur des systèmes et des procédés de commande d'un robot industriel pourvu d'un dispositif de mesure d'effort extérieur.

ARRIERE-PLAN TECHNOLOGIQUE

Les robots industriels, tels que les bras de robot, sont de plus en plus utilisés dans des applications de collaboration directe avec des opérateurs, dans lesquels les opérateurs peuvent agir directement sur le robot. C'est par exemple le cas d'applications chirurgicales, ou de certains procédés de fabrication industrielle, entre autres.
Par exemple, l'opérateur peut agir directement sur le robot en manipulant et en déplaçant une partie du bras de robot. Ce déplacement résulte d'un effort extérieur appliqué sur le robot et est détecté par un dispositif de mesure d'effort extérieur du robot. En fonction de ce retour, le système de commande du robot modifie en conséquence des consignes envoyées aux moteurs du robot, par exemple pour amener ou maintenir le bras de robot à la position choisie par l'opérateur, ou pour accompagner un déplacement manuel du robot par l'opérateur.
Pour tenir compte de l'action de l'opérateur sur le bras de robot, le système de contrôle traite des mesures d'efforts provenant du dispositif de mesure d'effort extérieur qui est soit un capteur multiaxe positionné entre l'extrémité du bras et l'outil soit un ensemble de capteurs chacun associé à un axe de mouvement.
Un inconvénient est que les capteurs d'effort sont sujets à une dérive au cours du temps pendant leur fonctionnement, ce qui oblige à appliquer une correction sur la valeur d'effort mesurée. Il est cependant nécessaire de mettre à jour la valeur de cette correction très régulièrement. Sans cette correction, la valeur d'effort mesurée sera erronée, ce qui peut créer des anomalies de fonctionnement du robot. Par exemple, cela peut engendrer des mouvements indésirables du robot lorsque celui-ci est contrôlé sur la base des informations issues du capteur d'effort.
Il existe donc un besoin pour des systèmes et des procédés de commande de robots industriels comprenant un ou des capteurs d'effort dont la calibration peut être mise à jour automatiquement.

RESUME DE L'INVENTION

Selon un aspect, l'invention concerne un procédé pour calibrer automatiquement un dispositif de mesure d'effort extérieur d'un robot industriel, ledit robot industriel comportant un bras de robot multiaxes, le bras de robot comportant, pour chaque axe d'articulation, un actionneur électrique et un capteur de position apte à mesurer la position articulaire de l'articulation correspondante, le robot comportant un dispositif de mesure d'effort, le dispositif de mesure d'effort comportant au moins un capteur de mesure apte à mesurer les efforts appliqués sur le bras de robot, le procédé comportant des étapes consistant à :

- pour une pluralité de cycles de mesures successifs, mettre en mémoire la position articulaire du bras de robot et calculer l'effort extérieur exercé sur le dispositif de mesure d'effort extérieur, l'effort extérieur exercé étant égal à l'effort extérieur mesuré par le dispositif de mesure d'effort extérieur auquel est soustrait un coefficient de correction de dérive du dispositif de mesure d'effort extérieur appliqué au bras de robot et l'effet de masse du robot ;
- après un nombre prédéfini n de cycles de mesures successifs, pour chaque cycle suivant, calculer un indicateur de variation d'effort extérieur exercé et un indicateur de mouvement, l'indicateur de variation d'effort extérieur exercé étant représentatif d'une variation de l'effort extérieur exercé pendant les n derniers cycles de mesure, l'indicateur de mouvement étant représentatif d'une variation de position articulaire pendant lesdits cycles de mesure;
- calculer l'effort moyen des efforts extérieurs exercés pendant lesdits n derniers cycles de mesure ;
- mettre à jour le coefficient de correction en l'incrémentant avec une valeur proportionnelle à l'effort moyen des efforts extérieurs exercés si les conditions suivantes sont satisfaites :

l'indicateur de mouvement est inférieur à un vecteur de seuils prédéterminés de variation de position, et l'indicateur de variation d'effort extérieur exercé est inférieur à un vecteur de seuils prédéterminés de variation d'effort, et l'effort moyen des efforts extérieurs exercés est, en valeur absolue, inférieur à un vecteur de seuils prédéterminés sur l'effort moyen.

Dans certains modes de réalisation le dispositif de mesure d'effort est un capteur d'efforts multiaxes placé entre l'extrémité du bras de robot et un effecteur.
Dans certains modes de réalisation, le dispositif de mesure d'effort est un ensemble de capteurs d'efforts placés à chaque articulation du bras de robot.

Dans certains modes de réalisation, la position articulaire du bras de robot est donnée par mesure.

Dans certains modes de réalisation, lors de la mise à jour du coefficient de correction, la valeur proportionnelle à l'effort moyen des efforts extérieurs exercés est égale audit effort moyen des efforts extérieurs exercés multiplié par un coefficient de proportionnalité compris entre 0 et 1.

Dans certains modes de réalisation, le nombre de cycle de mesures successifs est supérieur à 100.

Dans certains modes de réalisation, la mise à jour du coefficient de correction est inhibée si une mise à jour du coefficient de correction a déjà eu lieu moins d'une période de stabilisation prédéterminée plus tôt.

Dans certains modes de réalisation, le vecteur de seuils prédéterminés sur l'effort moyen est calculé à partir d'une information de température du dispositif de mesure d'effort extérieur du robot industriel.

Dans certains modes de réalisation, l'indicateur de variation d'effort extérieur exercé est égal à la différence entre le maximum de l'effort extérieur exercé et le minimum de l'effort extérieur exercé pendant lesdits cycles de mesure.

Dans certains modes de réalisation, l'indicateur de mouvement est égal à la différence entre le maximum et le minimum des positions articulaires pour chaque axe d'articulation du robot, pendant lesdits cycles de mesure.

Selon un autre aspect, l'invention concerne un robot industriel comportant un bras de robot multiaxes, le bras de robot comportant, pour chaque axe d'articulation, un actionneur électrique et un capteur de position apte à mesurer la position articulaire de l'articulation correspondante, le robot comportant un dispositif de mesure d'effort extérieur, le dispositif de mesure d'effort extérieur comportant au moins un dispositif de mesure apte à mesurer les efforts appliqués sur le bras de robot, le robot comportant une unité centrale configurée pour mettre en oeuvre un procédé tel que décrit.

BREVE DESCRIPTION DES FIGURES

L'invention sera mieux comprise et d'autres avantages de celle-ci apparaîtront plus clairement à la lumière de la description qui va suivre, donnée uniquement à titre d'exemple et faite en référence aux dessins annexés, dans lesquels :

[Fig 1] la figure 1 représente schématiquement et en blocs structurels un robot industriel selon l'invention conformément à un premier mode de réalisation ;

[Fig 2] la figure 2 représente schématiquement et en blocs structurels un robot industriel conformément à un deuxième mode de réalisation ;

[Fig 3] la figure 3 est un schéma fonctionnel synthétique illustrant un premier aspect du système de commande conforme à l'invention ;

[Fig 4] la figure 4 est un schéma fonctionnel synthétique illustrant un premier exemple de commande du robot conforme à l'invention ;

[Fig 5] la figure 5 est un schéma fonctionnel synthétique illustrant un deuxième exemple de commande du robot conforme à l'invention ;

[Fig 6] la figure 6 est un schéma fonctionnel synthétique illustrant un troisième exemple de commande du robot conforme à l'invention.

Pour décrire de manière claire et concise la présente invention, les dessins ne sont pas nécessairement à l'échelle et certaines caractéristiques peuvent être présentées sous une forme schématique.

DESCRIPTION DETAILLEE DE MODES DE REALISATION

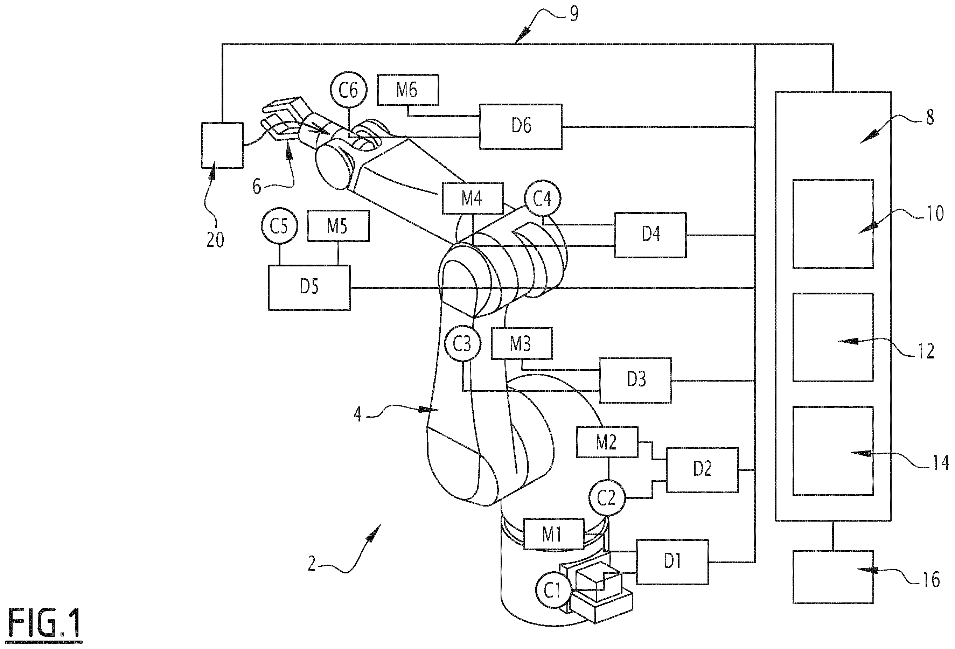

La figure 1 représente un exemple de robot industriel 2.

Le robot 2 comporte un bras de robot multiaxes 4. Par exemple, le bras de robot 4 comporte plusieurs segments articulés deux à deux autour d'axes de rotation.

Le bras de robot 4 peut comporter un effecteur 6, tel qu'un outil pilotable, qui est placé en bout du bras de robot 4.

Le bras de robot 4 comporte une pluralité d'actionneurs électriques, notés M1, M2, M3, M4, M5 et M6 sur l'exemple de la figure 1 (et notés M1 à M6 dans ce qui suit). Chacun des actionneurs électriques est capable de déplacer par rotation ou par translation une partie du bras de robot 4 par rapport à une autre partie du bras de robot 4 autour d'un axe de mouvement, tels qu'un des axes de rotation.

Chaque actionneur électrique M1 à M6 comporte un moteur électrique, tels que des moteurs électriques synchrones sans balais, ou tout autre moteur électrique adapté.

Le robot 2 comporte aussi une pluralité de capteurs de position, notés C1, C2, C3, C4, C5 et C6 sur l'exemple de la figure 1 (et notés C1 à C6 dans ce qui suit).

Chaque actionneur électrique M1 à M6 est associé à un capteur de position C1 à C6. Chaque capteur de position C1 à C6 est configuré pour mesurer une position articulaire de cet actionneur électrique.

Par exemple, les capteurs de position C1 à C6 sont des capteurs d'angle, tels que des codeurs rotatifs, ou des résolveurs, ou tout capteur adapté. La position articulaire correspond par exemple à une position angulaire de l'articulation.

De préférence, le robot 2 est un robot à 6 axes. Le bras de robot 4 présente donc six degrés de liberté et comporte six actionneurs électriques M1 à M6 et six capteurs de position C1 à C6.

Chaque codeur mesure la position articulaire qi, de l'axe correspondant, où l'indice « i » est un entier compris entre 1 et le nombre de capteurs (ici égal à 6). On note q le vecteur regroupant les positions articulaires de tous les axes.

Chaque capteur de position est connecté à une unité de pilotage, notées D1, D2, D3, D4, D5 et D6 sur l'exemple de la figure 1 (et notées D1 à D6 dans ce qui suit). L'unité de pilotage est connectée à un des actionneurs électriques M1 à M6 et est apte à en assurer le fonctionnement régulé à partir d'une consigne.

Par exemple, pour un actionneur électrique M1 à M6, l'unité de pilotage D1 à D6 est liée au moteur par des conducteurs électriques et génère les courants circulant dans les phases des moteurs de manière à suivre une consigne de courant, de couple, de vitesse ou de position. Chaque unité de pilotage D1 à D6 incorpore une boucle de contrôle de position, une boucle de contrôle de vitesse et une boucle de contrôle de courant dont le fonctionnement est cadencé de façon croissante.

Le robot 2 comporte également un système de commande comportant une unité centrale 8 comportant une mémoire et au moins un processeur (ou un microcontrôleur, ou DSP, ou FGPA) capable de faire fonctionner des programmes de commande du robot.

En variante, l'unité centrale 8 peut aussi être composée de plusieurs processeurs reliés par des moyens de communications adéquats.

L'unité centrale 8 est reliée aux unités de pilotage D1 à D6, par exemple par un bus de communication 9, de façon à leur transmettre notamment les consignes de pilotage du robot (par exemple, consigne de courant, de couple, de vitesse de position).

L'unité centrale 8 comporte un module de contrôle en effort 10, un module d'auto-calibration 12 d'un dispositif de mesure d'effort constitué d'un capteur d'efforts multiaxes et un module de poids 14 implémentant un modèle de poids, dont le rôle sera expliqué en détail dans ce qui suit.

L'unité centrale 8 est de préférence connectée à une interface utilisateur 16, ou interface homme-machine, qui peut comporter un écran d'affichage et des moyens de saisie de données, tels qu'un clavier, un pointeur, un écran tactile, un microphone couplé à un système de reconnaissance vocale, ou tout moyen approprié.

Le robot 2 comporte également un dispositif de mesure d'effort 20 constitué d'un capteur d'efforts multiaxes.

Le dispositif de mesure d'effort extérieur 20 comporte au moins un dispositif de mesure apte à mesurer les efforts appliqués sur le bras de robot 4, tels que des efforts appliqués manuellement par un utilisateur.

Dans le mode de réalisation de la figure 1, le dispositif de mesure d'effort extérieur 20 est placé entre l'extrémité du bras de robot 4 et l'effecteur 6.

De préférence, le capteur d'efforts multiaxes du dispositif de mesure d'effort extérieur 20 est constitué d'au moins 6 systèmes individuels de mesure, tel que des jauges de contraintes piezo-résistives solidaires d'un corps d'épreuve. L'agencement géométrique des systèmes individuels de mesure, qui n'est pas nécessairement aligné sur un repère cartésien canonique, permet de reconstruire le torseur d'effort complet par combinaison linéaire des mesures qu'il produit.

Le dispositif de mesure d'effort extérieur 20 constitué du capteur d'efforts multiaxes est configuré pour fournir une mesure de l'effort extérieur mesuré $F_{capteur}$ à l'unité centrale 8, par exemple par le bus de communication 9.

Dans ce cas, l'effort extérieur mesuré $F_{capteur}$ est un vecteur à 6 dimensions représentant le torseur d'effort appliqué sur le capteur, regroupant les 3 coordonnées cartésiennes de la mesure de force, et les 3 coordonnées cartésiennes de la mesure du moment.

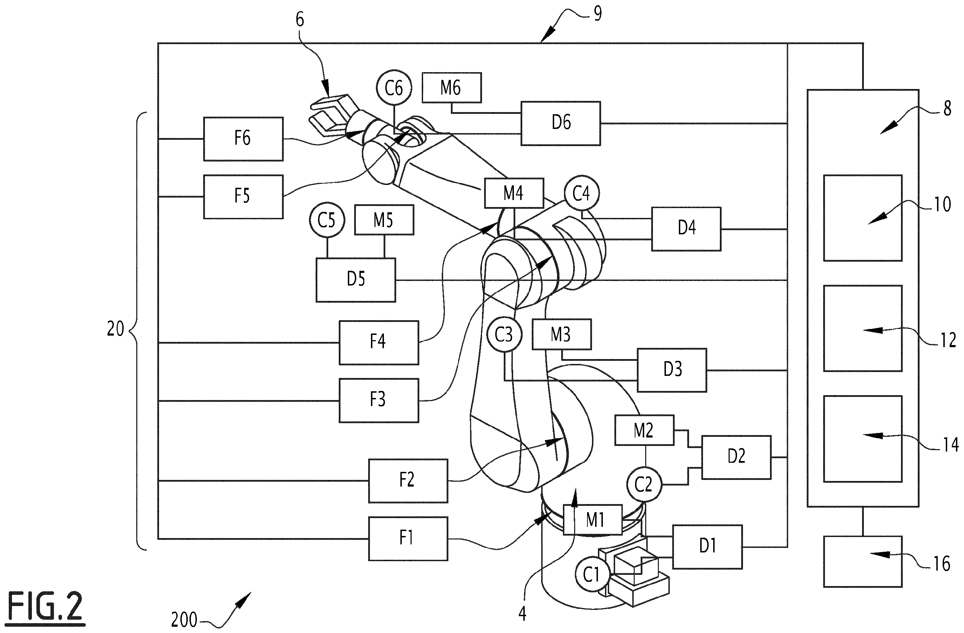

La figure 2 représente un deuxième exemple de réalisation dans lequel, l'unique capteur d'efforts multiaxes du premier mode de réalisation est remplacé par un ensemble de capteurs d'efforts articulaires F1, F2, F3, F4, F5 et F6 (notés F1 à F6 dans ce qui suit) qui sont chacun associé à un axe du bras de robot 4 et qui comprennent chacun un circuit électronique capable de transformer la mesure d'effort en un signal de mesure, par exemple un signal de mesure numérique. L'ensemble de capteurs d'efforts articulaires F1, F2, F3, F4, F5 et F6 constitue un dispositif de mesure d'effort extérieur 20.

Par exemple, le premier capteur d'efforts F1 de l'ensemble 20 est associé à l'axe du bras de robot qui comporte le premier actionneur M1 et le premier capteur de position C1, et ainsi de suite.

Chaque capteur d'effort articulaire F1 à F6 est relié à l'unité centrale, par exemple par le bus de communication 9. Dans ce cas, l'effort extérieur mesuré $F_{capteur}$ est un vecteur à 6 dimensions, regroupant les signaux de mesure issus des différents capteurs d(efforts articulaires F1 à F6.

Mis à part ces différences, le robot 200 du mode de réalisation de la figure 2 est essentiellement similaire voire identique au robot 2 décrit en référence à la figure 1.

En pratique, l'effort extérieur mesuré $F_{capteur}$ donné par un dispositif de mesure d'effort extérieur 20 ne correspond pas rigoureusement à l'effort réel $F_{réel}$ agissant sur le dispositif de mesure. Au contraire, l'effort extérieur mesuré est affecté par une dérive, notée $F_{offset\_réel}$, aussi nommée offset, qui est propre au dispositif de mesure d'effort extérieur 20. Cette dépendance est résumée par la formule suivante :

$$[\text{Math 1}] \qquad F_{capteur} = F_{réel} + F_{offset\_réel}.$$

Cet offset ne peut pas être directement mesuré et varie dans le temps, notamment en fonction de la température du dispositif de mesure d'effort extérieur 20 et de l'électronique de traitement du signal associée au dispositif de mesure d'effort extérieur 20.

Lors du fonctionnement du robot, et plus particulièrement dans un fonctionnement en guidage manuel (« hand guiding » en anglais), les efforts extérieurs mesurés $F_{capteur}$ sont utilisées par le module de contrôle en effort 10 pour piloter le mouvement du robot. Les algorithmes de commande en effort utilisent l'effort extérieur corrigé $F_{cor}$ par un coefficient de correction $F_{offset}$ (ou « offset estimé »). Cette dépendance est résumée par la formule suivante :

$$[\text{Math 2}] \qquad F_{cor} = F_{capteur} - F_{offset}.$$

Selon l'invention, une fonction de l'unité centrale 8 et de ses modules 10, 12 et 14 est de calibrer automatiquement le dispositif de mesure d'effort extérieur 20 en corrigeant l'offset estimé $F_{offset}$. De préférence, calibrer le dispositif de mesure d'effort extérieur consiste à déterminer l'offset estimé $F_{offset}$ (que l'on considère suffisamment proche de l'offset réel $F_{offset\_réel}$), de manière à ce que l'effort extérieur corrigé $F_{cor}$ soit le plus proche de l'effort réel $F_{réel}$.

En effet, au cours du fonctionnement du robot 2 ou 200, l'offset réel varie sous l'effet de conditions environnantes, telle que la température. En général, il s'agit d'une dérive progressive au cours du temps. Pour éviter que cette dérive perturbe le contrôle en effort du robot, il est nécessaire de recalibrer le dispositif de mesure d'effort extérieur 20.

Le procédé de calibration objet de l'invention permet de recalibrer le dispositif de mesure d'effort extérieur 20 sans interrompre le fonctionnement du robot 2 ou 200 ni effectuer des manoeuvres spécifiques, telle qu'une séquence de test.

En pratique, quel que soit le mode de réalisation, le module d'auto-calibration 12 de l'unité centrale 8 est configuré pour mettre à jour l'offset du dispositif de mesure d'effort extérieur à partir des positions articulaires q1 à q6 mesurés par les codeurs de positions C1 à C6 et de l'effort extérieur mesuré $F_{capteur}$.

Le module de contrôle en effort 10 de l'unité centrale 8 est configuré pour calculer et transmettre les consignes de pilotage p1 à p6 des unités de pilotage D1 à D6 en fonction des positions articulaires q1 à q6 mesurées, de l'effort extérieur mesuré $F_{capteur}$ et d'un programme applicatif.

Par exemple, les modules sont implémentés par des instructions machine et/ou un code logiciel exécutables par le processeur de l'unité centrale 8 et/ou par des circuits électroniques connectés à l'unité centrale 8 ou faisant partie de l'unité centrale 8.

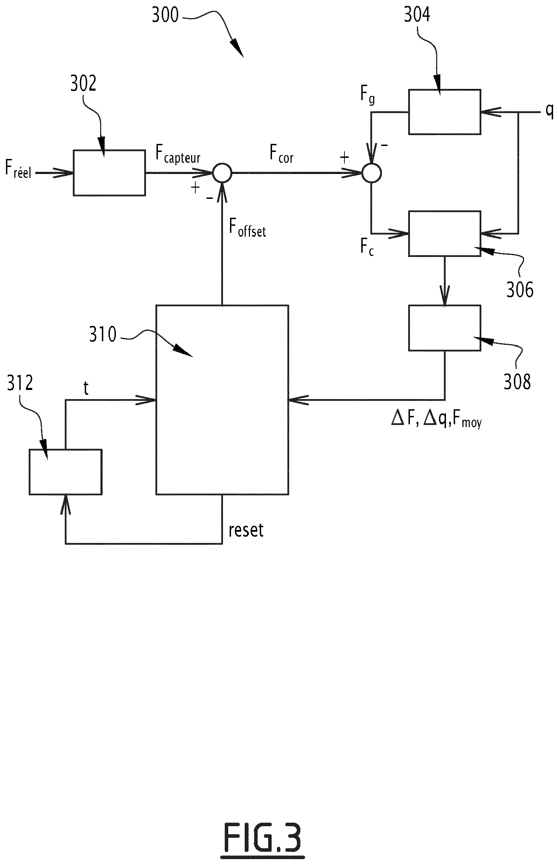

La figure 3 représente un schéma blocs 300 illustrant le fonctionnement du procédé d'auto-calibration, qui est réalisé de manière itérative lors de chaque cycle de mesure.

Préalablement à l'exécution du procédé, un coefficient de correction $F_{offset}$ acceptable a d'abord été déterminé, par exemple au cours d'une opération de calibration réalisée manuellement, puis mis en mémoire, par exemple dans une mémoire de l'unité centrale 8.

Le module d'auto-calibration 12 calcule ensuite l'effort extérieur exercé Fc égal à l'effort extérieur mesuré $F_{capteur}$ issu du dispositif de mesure d'effort extérieur 20 (représenté ici sous la référence 302) auquel le coefficient de correction $F_{offset}$ courant et l'effet de masse Fg sont soustraits. Cette relation est résumée par la formule suivante :

$$[\text{Math 3}] \qquad F_c = F_{capteur} - F_{offset} - Fg.$$

Dans cette description, les efforts sont des grandeurs vectorielles. Autrement dit, chacun des vecteurs d'efforts $F_{capteur}$, $F_{offset}$, Fc, Fg, ... a plusieurs composantes scalaires, typiquement six composantes pour un robot à six axes. Dans l'exemple de la figure 1, chacun des vecteurs d'efforts comporte trois composantes de force et trois composantes égales à des moments. Dans l'exemple de la figure 2, chaque vecteur d'effort comporte six composantes d'efforts articulaires.

L'effet de masse du robot Fg est un vecteur qui représente les efforts qui sont dus à la masse des éléments du bras de robot 4 et de l'effecteur 6 qui sont mesurés par le ou les capteurs d'effort du dispositif de mesure d'effort extérieur 20.

Dans l'exemple de la figure 1, le torseur du poids de l'effecteur 6 est l'effet de masse Fg du robot et est calculé à partir des positions articulaires q1 à q6 correspondant à l'instant de la mesure de l'effort extérieur mesuré $F_{capteur}$.

Dans l'exemple de la figure 2, l'effet de masse du robot Fg est un vecteur regroupant pour chaque articulation, le couple statique exercé par l'ensemble des corps du robot situés en aval du capteur d'effort de l'articulation. Ce vecteur Fg est calculé à partir des positions articulaires q1 à q6, en retenant la valeur de ces positions pour l'instant auquel on mesure l'effort extérieur mesuré $F_{capteur}$.

Pour ces calculs de masse, l'unité centrale 8 utilise le module de poids 14, ce dernier étant apte à calculer l'effet de masse du robot Fg utilisant un modèle, dit « Modèle poids » (référence 304), qui s'appuie sur un modèle géométrique du bras et les données de masse(position des centres de gravité des corps et masses associées) du bras de robot 4 et de l'effecteur 6. Le calcul de l'effet de masse du robot Fg requiert la connaissance des positions articulaires q du robot ainsi que la direction suivant laquelle la gravité s'applique.

Les paramètres nécessaires à ce modèle peuvent être déterminés avant même le fonctionnement du robot à partir des plans détaillés du bras de robot 4 et de son effecteur 6 (dimensions, forme, masse).

Alternativement, les paramètres du modèle peuvent être déterminés expérimentalement par des mesures réalisées avant la mise en oeuvre de l'auto-calibration. Par exemple, on peut utiliser des méthodes connues basées sur des mesures d'efforts et de positions pour différentes positions du robot, puis une identification des paramètres par une méthode de type moindres carrés.

De retour au procédé de la figure 3, après avoir calculé l'effort extérieur exercé Fc, le module d'auto-calibration 12 stocke (bloc 306) dans une mémoire (par exemple un buffer circulaire) les n dernières valeurs de l'effort extérieur exercé Fc, ainsi que les n dernières mesures des positions articulaires q du robot, où n est un nombre entier non nul. En pratique, ces n dernières valeurs ont été enregistrées pour chacun des n différents cycles de mesure successifs.

A chaque itération, le module d'auto-calibration 12 calcule un indicateur de variation d'effort extérieur exercé ΔF (bloc 308), qui est défini comme étant égal à la différence entre le maximum de l'effort extérieur exercé max(Fc) et le minimum de l'effort extérieur exercé min(Fc) pendant lesdits n cycles de mesure. Ce calcul est résumé par la formule suivante :

$$[\text{Math 4}] \qquad \Delta F = \max(Fc) - \min(Fc).$$

Dans cette formule, le maximum est calculé sur les n dernières valeurs enregistrées de l'effort extérieur exercé Fc. Plus précisément, le maximum est un vecteur, par exemple de dimension 6 pour un robot 6 axes. Chaque composante du maximum correspond à une composante de l'effort extérieur exercé Fc. Il en va de même pour le minimum. L'indicateur de variation d'effort extérieur exercé ΔF est donc typiquement un vecteur de dimension 6 pour un robot 6 axes.

De manière alternative, chaque composante de l'indicateur de variation d'effort extérieur exercé ΔF peut être calculée comme l'écart-type de la composante correspondante de l'effort extérieur exercé Fc. L'important est qu'une grande valeur de l'indicateur de variation d'effort extérieur exercé ΔF représente une variation importante de l'effort extérieur exercé Fc pendant les n derniers cycles.

Pour chaque itération, le module d'auto-calibration 12 calcule également (bloc 308), pour chaque axe/moteur du robot, un indicateur de mouvement Δq défini comme étant égal à la différence entre le maximum max(q) et le minimum min(q) des positions articulaires pour chaque axe d'articulation du robot. Ce calcul est résumé par la formule suivante :

$$[\text{Math 5}] \qquad \Delta q = \max(q) - \min(q).$$

Comme précédemment, le maximum est calculé sur les n dernières valeurs enregistrées des positions articulaires q. Il en va de même pour le minimum. L'indicateur de mouvement Δq est donc typiquement un vecteur de dimension 6 pour un robot 6 axes.

De manière alternative, chaque composante de l'indicateur de mouvement Δq peut être calculée comme l'écart-type de la composante correspondante de q. L'important est qu'une grande valeur de l'indicateur de mouvement Δq représente un mouvement significatif du robot pendant les n derniers cycles.

Le module d'auto-calibration 12 calcule également (bloc 308) l'effort moyen des efforts extérieurs exercés $F_{moy}$ qui est la moyenne des efforts extérieurs exercés $F_c$ sur les n dernières mesures. Ce calcul est résumé par la formule suivante, où $F_{moy}$ est un vecteur comme expliqué précédemment :

$$[\text{Math 6}] \qquad F_{moy} = \text{moyenne}(Fc).$$

Ensuite (bloc 310), le module d'auto-calibration 12 compare les vecteurs calculés avec des vecteurs de référence prédéterminés (et plus précisément, compare les composantes des vecteurs calculés avec les composantes des vecteurs de références), listées ci-après. En fonction du résultat de la comparaison, le coefficient de correction $F_{offset}$

est mis à jour, ou non.

Plus précisément, le module d'auto-calibration 12 met à jour (bloc 308) le coefficient de correction $F_{offset}$ en l'incrémentant avec une valeur proportionnelle à la moyenne calculée $F_{moy}$ si les conditions suivantes sur les valeurs de référence sont satisfaites :

- l'indicateur de mouvement $\Delta q$ est inférieur à un vecteur de seuils prédéterminés de variation de position $\Delta q_{max}$, et
- l'indicateur de variation d'effort extérieur exercé $\Delta F$ est inférieur à un vecteur de seuils prédéterminés de variation d'effort $\Delta F_{max}$, et
- l'effort moyen des efforts extérieurs exercés $F_{moy}$ est, en valeur absolue, inférieur à un vecteur de seuils prédéterminés sur l'effort moyen $F_{max}$.

$\Delta q_{max}$ est un vecteur de seuils prédéterminés sur la variation de position. Si l'indicateur de mouvement $\Delta q$ est inférieur au vecteur de seuils prédéterminés de variation de position $\Delta q_{max}$, cela signifie que la position du robot a peu varié au cours des n dernières mesures.

$F_{max}$ est un vecteur de seuils prédéterminés sur l'effort moyen. Si l'effort moyen des efforts extérieurs exercés $F_{moy}$ est, en valeur absolue, inférieur au vecteur de seuils prédéterminés sur l'effort moyen $F_{max}$, cela signifie que l'effort moyen mesuré (avec offset et gravité compensé) est faible.

$\Delta F_{max}$ est un vecteur de seuils prédéterminés sur la variation d'effort. Si l'indicateur de variation d'effort extérieur exercé $\Delta F$ est inférieur au vecteur de seuils prédéterminés de variation d'effort $\Delta F_{max}$, pour toutes les composantes du vecteur, cela signifie que l'effort extérieur exercé Fc a peu varié au cours des n dernières mesures.

Si ces conditions sont toutes réunies, alors le robot peut être considéré comme étant immobile et sans contact extérieur, et le module d'auto-calibration utilise l'effort moyen des efforts extérieurs exercés $F_{moy}$ pour mettre à jour le coefficient de correction $F_{offset}$.

Comme expliqué, le module d'auto-calibration 12 met à jour le coefficient de correction $F_{offset}^{k}$ (valeur courante) en incrémentant la précédente valeur ($F_{offset}^{k-1}$) avec une valeur proportionnelle à l'effort moyen des efforts extérieurs exercés $F_{moy}$. Ce calcul est résumé par la formule suivante :

$$[\text{Math 7}] \qquad F_{offset}^{k} = F_{offset}^{k-1} + a \times F_{moy}$$

Avantageusement, le coefficient de proportionnalité « a » est compris entre 0 et 1.

Si le coefficient de proportionnalité « a » est proche de 0, on modifie peu le coefficient de correction (on fait plus confiance à la valeur précédente). Si le coefficient de proportionnalité « a » est égal à 1, on change le coefficient de correction comme lors d'une calibration classique.

En effet, classiquement, la calibration du dispositif de mesure d'effort extérieur a lieu lors d'une procédure spécifique indépendante des phases d'utilisation du robot en tant que manipulateur dans laquelle aucun effort extérieur n'est appliqué sur le dispositif de mesure d'effort extérieur mis à part le poids de l'effecteur transporté par le robot (et celui des segments du robot dans le second exemple de réalisation) et supposé connu.

De façon optionnelle, dans le procédé de la figure 3, le module d'auto-calibration 12 peut implémenter une inhibition temporaire (représentée par le bloc 312 et la flèche « t » sur la figure 3), ou « timer », qui suspend l'auto-calibration, c'est-à-dire la remise à jour du coefficient de correction $F_{offset}$.

Ainsi, une fois le coefficient de correction modifié et pendant une période de stabilisation $t_{min}$ prédéfinie, le coefficient de correction $F_{offset}$ reste constant.

Cela permet avantageusement d'éviter des oscillations causées par le fait que le coefficient de correction influence la mesure d'effort, elle-même utilisée pour déterminer la prochaine valeur du coefficient de correction.

En fixant la période de stabilisation $t_{min}$ supérieure au temps d'acquisition des n valeurs, on garantit que les valeurs utilisées pour calculer le nouveau coefficient de correction $F_{offset}$ ont bien toutes été mesurées avec la valeur précédente du coefficient de correction $F_{offset}$.

Cette inhibition peut cependant ne pas être mise en oeuvre. Lorsqu'elle est mise en oeuvre, cette inhibition peut être interrompue ou réinitialisée par le module d'auto-calibration 12 (signal « reset »).

Enfin, de manière optionnelle, le robot ou son environnement proche peut-être équipé d'un capteur de température. Idéalement, dans le cas d'un dispositif de mesure d'effort extérieur constitué d'un capteur d'effort placé à l'extrémité du robot, le capteur de température sera à proximité de ce capteur. La mesure de température fournie par le capteur d'effort est mémorisée lors de chaque changement du coefficient de correction $F_{offset}$. Alors, le vecteur de seuils prédéterminés sur l'effort moyen $F_{max}$ peut être défini comme une fonction croissante de l'écart entre la température courante $T_{courante}$, et la température mémorisée $T_{mem}$. Par exemple :

$$[\text{Math 8}] \qquad F_{max} = F_{max,0} + k.\left| T_{courante} - T_{mem} \right|$$

où $F_{max,0}$ et k sont des vecteurs de même dimension que le vecteur de seuils prédéterminés sur l'effort moyen $F_{max}$, et ont des valeurs prédéfinies.

En effet, si la température a beaucoup changé, l'offset d'effort réel aura probablement plus varié aussi. Il est donc bénéfique d'augmenter le seuil dans ce cas pour favoriser la recalibration.

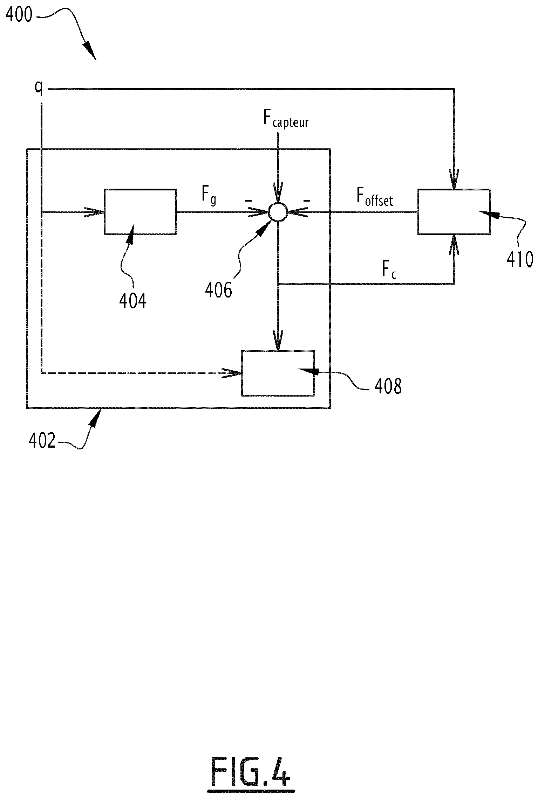

Les figures 4 à 6 illustrent des exemples mettant en oeuvre le procédé d'auto-calibration selon l'invention lors des différents cycles de commande au cours du fonctionnement du robot 2 ou 200.

Sur la figure 4 est illustré un premier exemple 400.

Dans le bloc 402, le « modèle poids » 404 est utilisé pour déterminer l'effet de masse du robot Fg à partir des positions calculées.

Dans le schéma ci-dessus, le module de contrôle en effort (bloc 408) servant à piloter le robot utilise en entrée l'effort extérieur exercé Fc, ce dernier étant obtenu en soustrayant (bloc 406) à l'effort extérieur mesuré $F_{capteur}$ le coefficient de correction $F_{offset}$ donné par le procédé d'auto-calibration selon l'invention (bloc 410) et l'effet de masse du robot Fg.

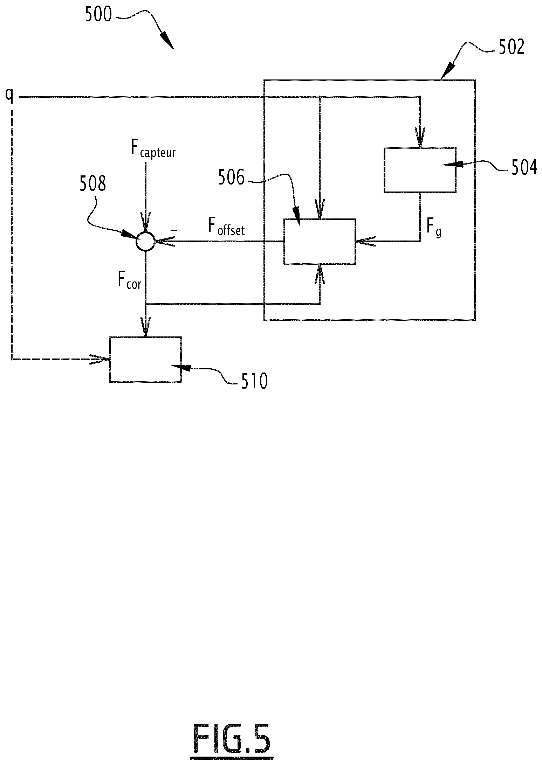

Sur la figure 5 est illustré un deuxième exemple 500.

Dans le schéma ci-dessus, au sein du bloc 502, le « modèle poids » 504 est utilisé pour déterminer l'effet de masse du robot Fg à partir des positions calculées puis fournit l'effet de masse du robot Fg au module d'auto-calibration 506, qui met en oeuvre le procédé d'auto-calibration selon l'invention.

Le module de contrôle en effort 510 servant à piloter le robot utilise l'effort extérieur corrigé $F_{cor}$ en sortie du bloc 508, l'effort extérieur corrigé $F_{cor}$ étant égal à l'effort extérieur mesuré $F_{capteur}$ auquel est soustrait le coefficient de correction $F_{offset}$, sans compensation de gravité. Dans le module de contrôle en effort 510, la compensation de gravité est réalisée autrement, par exemple avec une compensation dynamique plus complexe.

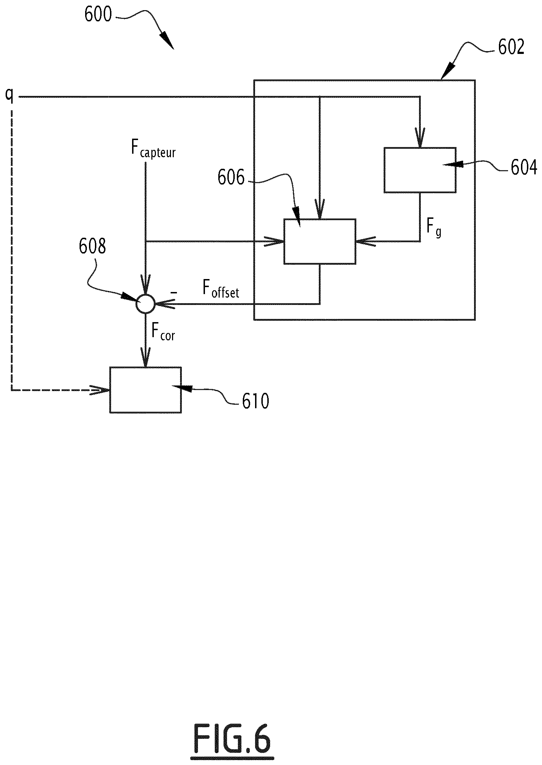

Sur la figure 6 est illustré un troisième exemple 600.

Comme dans l'exemple précédent, au sein du bloc 602, le « modèle poids » 604 est utilisé pour déterminer l'effet de masse du robot Fg à partir des positions calculées puis fournit l'effet de masse du robot Fg au module d'auto-calibration 606, qui met en oeuvre le procédé d'auto-calibration selon l'invention. Le module de contrôle en effort 610 servant à piloter le robot utilise l'effort extérieur corrigé $F_{cor}$ en sortie du bloc 608, l'effort extérieur corrigé $F_{cor}$ étant égal à l'effort extérieur mesuré $F_{capteur}$ auquel est soustrait le coefficient de correction $F_{offset}$. En revanche, le module d'auto-calibration 606 utilise également les valeurs d'effort extérieurs mesurés $F_{capteur}$ mesurées par le dispositif de mesure d'effort extérieur 20.

Dans tous les cas illustrés par les figures 4, 5 et 6, le module d'auto-calibration mettant en oeuvre le procédé d'auto-calibration selon l'invention utilise des données calculées à partir de l'effort extérieur mesuré $F_{capteur}$ et des positions articulaires q mesurées ou calculées.

D'autres implémentations sont possibles.

L'invention a été décrite avec l'architecture la plus simple et la plus courante, qui permet d'implémenter l'invention. De nombreuses autres architectures du robot et/ou du système de commande sont possibles.

Les modes de réalisation et les variantes envisagés ci-dessus peuvent être combinés entre eux pour créer de nouveaux modes de réalisation.

## Revendications

1. Procédé pour calibrer automatiquement un dispositif de mesure d'effort extérieur d'un robot industriel (2, 200), ledit robot industriel comportant un bras de robot (4) multiaxes, le bras de robot comportant, pour chaque axe d'articulation, un actionneur électrique (M1, M2, M3, M4, M5, M6) et un capteur de position (C1, C2, C3, C4, C5, C6) apte à mesurer la position articulaire de l'articulation correspondante, le robot comportant un dispositif de mesure d'effort (20), le dispositif de mesure d'effort (20) comportant au moins un capteur de mesure apte à mesurer les efforts appliqués sur le bras de robot, le procédé comportant des étapes consistant à :

   pour une pluralité de cycles de mesures successifs, mettre en mémoire la position articulaire (q) du bras de robot et calculer l'effort extérieur exercé (Fc) sur le dispositif de mesure d'effort extérieur, l'effort extérieur exercé (Fc) étant égal à l'effort extérieur mesuré ($F_{capteur}$) par le dispositif de mesure d'effort extérieur auquel est soustrait un coefficient de correction ($F_{offset}$) de dérive du dispositif de mesure d'effort extérieur appliqué au bras de robot et l'effet de masse du robot (Fg);
   après un nombre prédéfini n de cycles de mesures successifs, pour chaque cycle suivant,

calculer un indicateur de variation d'effort extérieur exercé($\Delta$F) et un indicateur de mouvement ($\Delta$q), l'indicateur de variation d'effort extérieur exercé ($\Delta$F) étant représentatif d'une variation de l'effort extérieur exercé ($F_c$) pendant les n derniers cycles de mesure, l'indicateur de mouvement ($\Delta$q) étant représentatif d'une variation de position articulaire pendant lesdits cycles de mesure;

calculer l'effort moyen des efforts extérieurs exercés ($F_{moy}$) pendant lesdits n derniers cycles de mesure ;

mettre à jour le coefficient de correction ($F_{offset}$) en l'incrémentant avec une valeur proportionnelle à l'effort moyen des efforts extérieurs exercés ($F_{moy}$) si les conditions suivantes sont satisfaites :

l'indicateur de mouvement ($\Delta$q) est inférieur à un vecteur de seuils prédéterminés de variation de position ($\Delta q_{max}$), et

l'indicateur de variation d'effort extérieur exercé ($\Delta$F) est inférieur à un vecteur de seuils prédéterminés de variation d'effort ($\Delta F_{max}$), et

l'effort moyen des efforts extérieurs exercés ($F_{moy}$) est, en valeur absolue, inférieur à un vecteur de seuils prédéterminés sur l'effort moyen($F_{max}$).

2. Procédé selon la revendication 1, dans lequel le dispositif de mesure d'effort (20) est un capteur d'efforts multiaxes (20) placé entre l'extrémité du bras de robot (4) et un effecteur (6).

3. Procédé selon la revendication 1, dans lequel le dispositif de mesure d'effort(20) est un ensemble de capteurs d'efforts (F1, F2, F3, F4, F5, F6) placés à chaque articulation du bras de robot (4).

4. Procédé selon l'une quelconque des revendications précédentes, dans lequel la position articulaire (q) du bras de robot est donnée par mesure.

5. Procédé selon l'une quelconque des revendications précédentes, dans lequel lors de la mise à jour du coefficient de correction ($F_{offset}$), la valeur proportionnelle à l'effort moyen des efforts extérieurs exercés ($F_{moy}$) est égale audit effort moyen des efforts extérieurs exercés multiplié par un coefficient de proportionnalité compris entre 0 et 1.

6. Procédé selon l'une quelconque des revendications précédentes, dans lequel le nombre n de cycle de mesures successifs est supérieur à 100.

7. Procédé selon l'une quelconque des revendications précédentes, dans lequel la mise à jour du coefficient de correction ($F_{offset}$) est inhibée si une mise à jour du coefficient de correction ($F_{offset}$) a déjà eu lieu moins d'une période de stabilisation prédéterminée ($t_{min}$) plus tôt.

8. Procédé selon l'une quelconque des revendications précédentes, dans lequel le vecteur de seuils prédéterminés sur l'effort moyen ($F_{max}$) est calculé à partir d'une information de température du dispositif de mesure d'effort extérieur du robot industriel (2, 200).

9. Procédé selon l'une quelconque des revendications précédentes, dans lequel l'indicateur de variation d'effort extérieur exercé ( $\Delta$F) est égal à la différence entre le maximum de l'effort extérieur exercé ($F_c$) et le minimum de l'effort extérieur exercé ($F_c$) pendant lesdits cycles de mesure.

10. Procédé selon l'une quelconque des revendications précédentes, dans lequel l'indicateur de mouvement ($\Delta$q) est égal à la différence entre le maximum et le minimum des positions articulaires pour chaque axe d'articulation du robot, pendant lesdits cycles de mesure.

11. Robot industriel (2, 200) comportant un bras de robot (4) multiaxes, le bras de robot comportant, pour chaque axe d'articulation, un actionneur électrique (M1 ,M2,M3,M4,M5,M6) et un capteur de position (C1 ,C2,C3,C4,C5,C6) apte à mesurer la position articulaire de l'articulation correspondante, le robot comportant un dispositif de mesure d'effort extérieur (20), le dispositif de mesure d'effort extérieur (20) comportant au moins un dispositif de mesure apte à mesurer les efforts appliqués sur le bras de robot, le robot comportant une unité centrale (8) configurée pour mettre en oeuvre un procédé selon l'une des revendications 1 à 10.

FIG.1

EP 4 292 776 A1

FIG.2

FIG.3

$$F_{capteur}$$

q

$$F_g$$
$$F_{offset}$$
$$F_c$$

400

404

406

408

410

402

$$\underline{\text{FIG.4}}$$

500

502

q

$F_{capteur}$

508

506

504

$F_{offset}$

$F_g$

$F_{cor}$

510

# FIG.5

600

602

q

$F_{capteur}$

606

604

$F_g$

608

$F_{offset}$

−

$F_{cor}$

610

# FIG.6

Europäisches
Patentamt

European
Patent Office

Office européen
des brevets

# RAPPORT DE RECHERCHE EUROPEENNE

Numéro de la demande

**EP 23 17 8718**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | JP H08 43220 A (SANYO ELECTRIC CO) 16 février 1996 (1996-02-16) * alinéa [0006] - alinéa [0026] * * figure 1 * ----- | 1-11 | INV. B25J9/16 B25J13/08 |
| A | US 2020/061816 A1 (KARITO NOBUHIRO [JP] ET AL) 27 février 2020 (2020-02-27) * alinéa [0002] - alinéa [0008] * * alinéa [0016] - alinéa [0124] * * figure 1 * ----- | 1-11 | |
| A | US 2016/167231 A1 (NAKAYAMA KAZUTAKA [JP] ET AL) 16 juin 2016 (2016-06-16) * alinéa [0011] - alinéa [0018] * * alinéa [0031] - alinéa [0083] * * figure 1 * ----- | 1-11 | |
| A | US 2019/105785 A1 (MEYER KURT CHRISTOPHER [US] ET AL) 11 avril 2019 (2019-04-11) * alinéa [0096] - alinéa [0130] * ----- | 1-11 | DOMAINES TECHNIQUES RECHERCHES (IPC) |
| A | US 2019/077017 A1 (SHIMODAIRA YASUHIRO [JP]) 14 mars 2019 (2019-03-14) * alinéa [0001] - alinéa [0020] * * alinéa [0040] - alinéa [0046] * * alinéa [0056] - alinéa [0075] * * figures 1,6,7 * ----- | 1-11 | B25J G05B |

Le présent rapport a été établi pour toutes les revendications

| Lieu de la recherche | Date d'achèvement de la recherche | Examinateur |
|---|---|---|
| La Haye | 6 octobre 2023 | Orobitg Oriola, R |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
.......................................................................
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 23 17 8718

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

06-10-2023

| Document brevet cité au rapport de recherche | | Date de publication | Membre(s) de la famille de brevet(s) | | Date de publication |
|---|---|---|---|---|---|
| JP H0843220 | A | 16-02-1996 | AUCUN | | |
| US 2020061816 | A1 | 27-02-2020 | CN | 110842910 A | 28-02-2020 |
| | | | JP | 7155743 B2 | 19-10-2022 |
| | | | JP | 2020028926 A | 27-02-2020 |
| | | | US | 2020061816 A1 | 27-02-2020 |
| US 2016167231 | A1 | 16-06-2016 | CN | 105690383 A | 22-06-2016 |
| | | | DE | 102015015757 A1 | 16-06-2016 |
| | | | JP | 5931167 B1 | 08-06-2016 |
| | | | JP | 2016112627 A | 23-06-2016 |
| | | | US | 2016167231 A1 | 16-06-2016 |
| US 2019105785 | A1 | 11-04-2019 | AU | 2018347473 A1 | 23-04-2020 |
| | | | CN | 111328306 A | 23-06-2020 |
| | | | EP | 3676060 A1 | 08-07-2020 |
| | | | JP | 7301819 B2 | 03-07-2023 |
| | | | JP | 2020536755 A | 17-12-2020 |
| | | | KR | 20200071745 A | 19-06-2020 |
| | | | US | 10016900 B1 | 10-07-2018 |
| | | | US | 2019105785 A1 | 11-04-2019 |
| | | | US | 2020039086 A1 | 06-02-2020 |
| | | | US | 2023302658 A1 | 28-09-2023 |
| | | | WO | 2019074670 A1 | 18-04-2019 |
| US 2019077017 | A1 | 14-03-2019 | CN | 109483528 A | 19-03-2019 |
| | | | JP | 6996177 B2 | 17-01-2022 |
| | | | JP | 2019049472 A | 28-03-2019 |
| | | | US | 2019077017 A1 | 14-03-2019 |

EPO FORM P0460

Pour tout renseignement concernant cette annexe : voir Journal Officiel de l'Office européen des brevets, No.12/82